# EUROPEAN PATENT APPLICATION

(11) **EP 4 292 442 A1**
(43) Date of publication of application: **20.12.2023**
(21) Application number: 22178749.2
(22) Date of filing: 13.06.2022
(51) Int. Cl.: A23L 2/52, A23L 33/16

(54) **AN IRON FORTIFIED INSTANT BEVERAGE COMPOSITION**

(71) Applicant: Ekaterra Research and Development UK Limited, London EC4Y 0DY (GB)
(72) Inventor: The designation of the inventor has not yet been filed
(74) Representative: Mewburn Ellis LLP

(57) **Abstract**

The present invention relates to an instant beverage composition. In particular, the present invention relates to an iron fortified instant beverage composition. Accordingly, the present invention provides an instant beverage composition comprising;
a) a micronized iron compound; and
b) an instant beverage product.

## Description

### Field of the Invention

The present invention relates to an instant beverage composition. In particular, the present invention relates to an iron fortified instant beverage composition.

### Background and Prior Art

Staying hydrated is believed to bring about many health benefits to both the body and mind. Thus, it is often said that many non-alcoholic beverages are believed to refresh the mind. There are many non-alcoholic beverages available in the market for consumption. Tea and coffee are the most popular out of these.

Polyphenols that are present in tea are also considered to be good for human health. There are varieties of tea available in the market, e.g. black tea, green tea, oolong tea, white tea, *etc.* Black tea is generally prepared by a process which includes the steps of withering, macerating, fermenting, and firing/drying. On the other hand, green tea manufacturing process does not include the step of fermentation. Therefore, the characteristic profile of green tea is different from that of black tea.

Traditionally, tea referred to those products which were obtained from the tea plant *Camellia Sinensis.* However, recently, the definition of tea is now generally accepted to also include any form of herbal infusion. Thus, commonly, these herbal infusions are now referred to as herbal 'teas'.

Herbal teas or herbal infusions are also becoming increasingly popular because of the various health benefits provided by the different herbs. That is, herbal teas are generally rich in antioxidants, vitamins and essential nutrients, compounds which are strongly associated with health benefits, such as relieving stress, boosting immunity, reducing pain and aiding digesting. Thus, herbal teas are seen as a convenient way of delivering these essential nutrients and elements to an individual.

Most of the people in Western and Asian countries drink at least one from of tea or coffee at least once a day, or even more. Therefore, tea and coffee could be one of the ways of delivering nutrients and essentials elements.

Traditionally, such beverages are produced by infusing beverage plant material (e.g. tea leaves, coffee beans etc.) in hot water and separating the aqueous plant extract from the remaining insoluble organic material (plant) material.

Today, however, beverages, such as teas and coffees, can be prepared by more convenient methods which dispense with the need for manipulation of insoluble plant and bean material by the end-user or consumer. In particular, the beverages can be prepared from instant powders or granules which are free from insoluble organic material and so dissolve rapidly and completely on contact with hot water.

Instant beverages are increasingly being seen as convenient means for preparing and consuming non-alcoholic drinks such as teas and coffees. Conveniently, these instant beverages can be quickly and conveniently reconstituted into a cup of tea or coffee simply by the addition of water.

Iron represents one of the most important elements needed for proper functioning of human body. It is an essential element to produce blood in human body. Iron deficiency can lead to anaemia which can become serious if not treated on time. Hence, there are several iron fortified foods products are available in the market.

There are also prior arts which discloses iron fortified food products.

US6998143 (Nestle, 2006) discloses an iron fortification complex which may be used to fortify foods and beverages with iron. The complex is formed of ferric ions and caseinate. The complex is sufficiently stable as to be suitable for use in retorted products. However, despite the stability, the iron in the complexes has substantially the same bioavailability as ferrous sulfate.

WO03032741 (Unilever, 2003) discloses a tea product fortified with a ferrous-plant protein hydrolysate complex. The complex does not cause precipitation of iron-polyphenol; complexes in the tea and is also bioavailable. A tea drink made from the tea of the invention has an attractive colour.

Given the popularity and wide-spread consumption of beverages such as tea and coffee globally, and the growing prevalence of instant beverages, fortifying instant beverages with iron clearly would be beneficial in addressing the deficiency in iron amongst the global population.

However, the present inventors have discovered that fortifying an instant beverage product with iron is particularly problematic. It is believed that this problem arises because compounds (e.g. polyphenols) that are present in tea and coffee react with iron to form precipitates and make the colour of the beverage quite dark in colour. Beverages that are too dark in colour are generally not accepted by consumers.

On the other hand, as most of the people consumes tea and/or coffee more than once in a day, these beverages are a potentially useful source for delivering iron to human body. Hence, the delivery of the iron at the infusions also needs to be adequate.

Thus, there remains a need for an iron fortified instant beverage composition which delivers high amounts of iron to the end cup beverage, ideally whilst also preserving the aesthetic and sensual properties of the instant beverage infusion as far as possible.

### Summary of the invention

In a first aspect, the present invention provides an instant beverage composition comprising:
a) a micronized iron compound; and,
b) an instant beverage product.

This and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The disclosure of the invention as found herein will be understood to cover all embodiments as found in the claims and as discussed hereinbelow.

The present invention provides an instant beverage composition comprising:
a) a micronized iron compound; and,
b) an instant beverage product.

The micronized iron compound preferably has a particle size in the range of 0.1 to 100 micron. More preferably, the micronized iron compound has a particle size in the range of 0.1 to 50 micron. Even more preferably, the micronized iron compound has a particle size in the range of 0.1 to 40 micron. Still more preferably, the micronized iron compound has a particle size in the range of 0.1 to 30 micron. Yet more preferably, the micronized iron compound preferably has a particle size in the range of 0.1 to 20 micron. Further preferably, the micronized iron compound preferably has a particle size in the range of 0.1 to 10 micron. Most preferably, the micronized iron compound preferably has a particle size in the range of 2 to 8 micron.

The term "micron" will be understood to mean 1 micrometre (1 µm). Thus 0.1 to 10 microns will be understood as referring to a particle size of 0.1 µm to 10 µm.

It will also be understood that the particle size referred to herein refers to the (mean) average particle size of the iron compound.

The micronized iron compound may be obtained by any suitable means. For example, the micronized iron compound may be obtained by subjecting a commercially available iron compound to a process of size reduction in order to reduce the average (mean) particle size of the iron compound to an order of microns. Preferably, the process of size reduction will reduce the average (mean) particle size of the iron compound to the preferred particle sizes mentioned hereinabove.

Alternately, the micronized iron compound may be obtained already in a micronized form, and thus in a form which has an average particle size as mentioned hereinabove.

Suitably, the micronized iron compound is insoluble in water or has very limited water solubility. Thus, it is preferred that the solubility of the micronized iron compound in water at 25°C is less than 0.001 g/mL, and more preferably less than 0.0005 g/mL. Most preferably, the micronized iron compound is water insoluble.

The micronized iron compound may preferably be selected from micronized iron oxide, micronized ferric pyrophosphate, micronized carbonyl iron, micronized electrolytic iron and combination thereof. More preferably, the micronized iron compound may be selected from micronized iron oxide, micronized ferric pyrophosphate and a combination thereof. Most preferably, the micronized iron compound is micronized ferric pyrophosphate.

The amount of micronized iron compound present in the instant beverage composition is preferably in the range of 0.1 to 15 %, more preferably 0.1 to 10%, even more preferably, 0.1 to 5%, still more preferably 0.1 to 3%, yet more preferably 0.1 to 3%, and most preferably 0.5 to 1% by weight of the instant beverage composition.

In certain embodiments, the instant tea composition may also comprise one or more polysaccharides, preferably two polysaccharides. The first polysaccharide comprises maltodextrin and/or modified starch. Preferably, the first polysaccharide is selected from maltodextrin or modified starch. Most preferably, the first polysaccharide is maltodextrin.

Maltodextrin is a well-known food additive. It is a flavourless substance. It is generally produced from vegetable starch by hydrolysis. The starch is preferably corn or wheat.

The amount of maltodextrin used in the herbal composition of the present invention is preferably in the range of 0.5 to 5%, more preferably 1 to 4%, furthermore preferably 2 to 4% and most preferably 2 to 3% by weight of the composition.

Preferably, the ratio of the micronized iron compound to maltodextrin in the instant tea composition is between 2:0.8 and 0.8:2. More preferably, the ratio of micronized iron to maltodextrin in the instant tea composition is between 1.5:0.8 and 0.8:1.5. Even more preferably, the ratio of micronized iron to maltodextrin in the instant tea is between 1.3:0.8 and 0.8:1.3. Most preferably, the ratio of micronized iron to maltodextrin in the instant tea composition is between 1:0.8 and 0.8:1.

The term modified starch will be understood as being any naturally occurring starch that is modified by physical, chemical or enzymatic processes. Preferably, the modified starch is acetylated starch, dextrin or cross-linked starch.

The amount of modified starch used in the composition of the present invention is preferably in the range of 0.5 to 5%, more preferably 1 to 4%, furthermore preferably 2 to 4% and most preferably 2 to 3% by weight of the composition.

The instant tea composition of the present invention also comprises a second polysaccharide. The second polysaccharide comprises gum arabic and/or xanthan gum. Preferably, the second polysaccharide is selected from gum arabic or xanthan gum. Most preferably, the second polysaccharide is gum arabic. Gum arabic is also commonly known as gum acacia. It is an edible water-soluble gum widely used in food industries as stabilizer and/or thickener.

The amount of gum arabic and/or xanthan gum in the instant tea composition of the present invention preferably is in the range of 0.05 to 6%, more preferably 0.1 to 4%, further preferably 0.1 to 3% and most preferably 0.5 to 2% by weight.

The instant tea composition of the present invention comprises an instant beverage product. An instant beverage product preferably means a beverage product which can be prepared from instant powders or granules which are free from insoluble organic material and so dissolve rapidly and completely on contact with hot (boiling) water.

Instant beverages, such as instant coffee and tea powders, are usually produced from aqueous extracts made in the traditional way. These aqueous extracts may then be subjected to a clarification step (such as "de-creaming" used in the manufacture of tea powders) and/or concentrated under vacuum or by reverse osmosis. In the case of granular coffee production, the aqueous extract may also be foamed at this point. The resulting extract is then dried by either spray-drying or freeze-drying. If freeze-drying is used, the extract is usually frozen as a thin layer on a freezing belt before being ground in the frozen state. The resulting granules are usually poured into trays and freeze-dried at low pressure.

The instant beverage product is thus preferably in the form of a powder or granule produced by extracting the beverage product (e.g. tea leaf, coffee etc.) with a solvent (e.g. water), optionally clarifying the extract, and drying it (e.g. spray-drying or freeze-drying) to obtain a powder or granules.

The instant beverage product is thus preferably in the form of a powder or granule, preferably a powder. The instant beverage product may therefore be a powder or granule with an average particle size of 1200 µm or less, preferably 1100 µm or less, and most preferably 1000 µm or less.

The instant beverage product is preferably soluble in water with temperature in the range from 4°C to 100°C, more preferably from 6° C to 90°C and most preferably from 10°C to 80°C.

Non-limiting examples of possible instant beverage products include an instant tea product, an instant herbal product, an instant coffee product and an instant cocoa product.

In certain embodiments, the instant beverage product is an instant tea product.

Thus, the instant beverage product may preferably be selected from an instant black tea product, an instant green tea product, an instant matcha tea product, an instant oolong tea product, an instant white tea product and blends thereof. More preferably, the instant beverage product is selected from an instant black tea product, an instant green tea product and an instant matcha tea product, and most preferably an instant black tea product or an instant green tea product.

It will therefore be understood that an instant tea (e.g. black tea) product refers to a powdered or granulated beverage product derived from (black) tea leaves which can dissolve rapidly and completely on contact with hot (boiling) water.

"Tea" for the purposes of the present invention means material from *Camellia sinensis* var. *sinensis* and/or *Camellia sinensis* var. *assamica.* Especially preferred is material from var. *assamica* as this has a higher level of tea actives than var. *sinensis.*

"Black tea" refers to substantially fermented tea. "Fermentation" refers to the oxidative and hydrolytic process that tea undergoes when certain endogenous enzymes and substrates are brought together. During this process colourless catechins in the leaves are converted to a complex mixture of yellow and orange to dark-brown polyphenolic substances.

"Green tea" refers to substantially unfermented tea. Green tea has different characteristics than black tea. Green tea liquor is light in colour unlike black tea. Green tea also enriched with catechins and low or no amount of theaflavins.

In some embodiments, the instant beverage product is an instant herbal (tea) product.

For the purpose of the present invention, an instant herbal (tea) product may preferably be any instant (tea) product produced from a herbal plant material which is fit for human consumption. The herbal plant material may preferably comprise the leaves of the plant, roots of the plants, flowers of the plant, fruits of the plants or any other parts of the plants. Preferably, the herbal plant material refers to the leaves of the plant.

Preferably, the instant herbal (tea) product comprises medicinal plants which preferably means plants that have beneficial properties associated with human health.

In certain preferred embodiments, the instant herbal (tea) product is selected from a rooibos (tea) product, a hibiscus (tea) product, a chamomile (tea) product, a rosehip (tea) product, a mint (tea) product, a lemon verbena (tea) product, a chicory (tea) product, an orange (tea) product, a yerba mate (tea) product and combinations thereof.

Preferably, the instant herbal (tea) product is selected from a rooibos (tea) product, a hibiscus (tea) product, a chamomile (tea) product, a rosehip (tea) product, a lemon verbena (tea) product and combinations thereof. More preferably, the instant herbal (tea) product is selected from a rooibos (tea) product, a hibiscus (tea) product, a rosehip (tea) product and combinations thereof. Still more preferably, instant herbal (tea) product is selected from a rooibos (tea) product or a hibiscus (tea) product. Most preferably, the instant herbal (tea) product is a rooibos (tea) product.

In some embodiments, the instant beverage product is an instant tea product blend. That is, in some embodiments, the instant tea product is a blend of the iron fortified instant tea product described herein and a non-iron fortified instant tea product. For example, the blend comprises between 1 and 50 % of the iron fortified instant tea product by weight of the instant tea product. In other embodiments, the instant tea product is a blend of one or more instant tea products or instant herbal products.

In some embodiments, the instant beverage composition may also comprise milk powder. It will be appreciated that any suitable form of milk powder may be used. For example, the milk powder may be skimmed milk powder, semi-skimmed milk powder or whole milk powder.

In some embodiments, the instant beverage composition may also comprise sugar and/or one or more sweeteners. A non-limiting list of examples of possible sweeteners include acesulfame K, aspartame, saccharin, sorbitol, stevia, sucralose and xylitol.

In certain embodiments, the instant beverage composition comprises milk powder and sugar and/or one or more sweeteners.

It will also be understood that the instant beverage composition of the present invention may comprise one or more additional agents. For example, the instant beverage composition may comprise one or more nutrients, flavourings, pH regulators, bulking agents, anti-caking agents (e.g. silicon dioxide), cocoa extract etc.

A non-limiting list of possible flavourings include vanilla, fruit (e.g. strawberry, lemon, berry), ginger, cardamom, all spices, jasmine, tea essence (e.g. earl grey, black tea) and cheese.

A non-limiting list of possible nutrients include vitamins (e.g. vitamin C and vitamin D), minerals (e.g. zinc, calcium, sodium) and essential fatty-acids (e.g. omega-3 and omega-6). Preferably, the one or more additional nutrients is selected from vitamins (e.g. vitamin C and vitamin D) and minerals (e.g. zinc, calcium, sodium), and most preferably from vitamin C, vitamin D and zinc.

A non-limiting list of possible pH regulating agents include potassium and sodium carbonates and bicarbonates, tricalcium phosphate, acetic acid, citric acid, disodium phosphate and potassium phosphate. Preferably, the pH regulating agent is a potassium or sodium carbonate or bicarbonate. More preferably, the pH regulating agent is potassium bicarbonate or sodium bicarbonate. Most preferably, the pH regulating agent is potassium bicarbonate.

A non-limiting list of possible bulking agents include starch, carboxymethyl cellulose and sugar (e.g. dextrose).

The amount of additional agent (e.g. pH regulating agent) in the composition of the present invention is preferably in the range of 0.05 to 6%, more preferably 0.1 to 4%, even more preferably 0.1 to 3%, still more preferably 0.25 to 2%, and most preferably 0.5 to 1% by weight.

The present invention will now be demonstrated by way of non-limiting examples below. The examples are for illustration only and do not limit the scope of the invention in any manner.

### Examples

### End Cup Preparation

0.5 g of instant beverage (either fortified with or without iron) was taken in a mug and 200 mL of boiling water (<50 ppm total dissolved solids, TDS) was poured in it. The dissolved instant beverage was then used for further analysis.

In the case of Instant Matcha Tea, the quantities were slightly different. Thus, for Instant Matcha Tea 1.0 g of instant beverage was taken in a mug and 100 mL of boiling water (<50 ppm TDS) was poured in it.

### Materials Used

The instant tea materials used in the examples below, were provide from the following sources.

Instant Black Tea = Fresh tea leaf was obtained from Kenyan plantation. Instant black tea product was prepared by using standard process of preparing instant black tea product.

Instant Green Tea = Fresh tea leaf was obtained from Kenyan plantation. Instant green tea product was prepared by using standard process of preparing instant green tea product.
Instant Matcha Tea = Lipton ^{®} Matcha tea from UK
Instant Hibiscus = Martin Bauer Instant Powder from UK
Instant Rooibos = Fresh rooibos leaf was obtained from South Africa. Instant rooibos tea product was prepared by using standard process of preparing instant green tea product
Iron Trichloride (FeCl₃) = Merck
Iron Pyrophosphate (FePP) = Merck
Iron Oxide (Fe₂O₃) = Merck
Iron Carbonyl = Merck
Electrolytic Iron =Merck
The Iron Trichloride (FeCl₃) used herein was non-micronized and thus had an average particle size of greater than 100 µm.

### Iron Fortification Procedure

4 mg of iron and 0.5 g of instant beverage were mixed thoroughly for between 30 seconds and 1 minute to give the iron fortified instant beverage.

The specific instant beverage and iron source used for each example are detailed in Tables 1 to 9 below.

### Colour Measurements

Colour was measured using Konica Minolta CM5 Spectrophotometer using the transmittance mode and using a 1 cm quartz cuvette.

The instrument was calibrated using the standard white tile black light trap.

The a* and b* values were then measured using the following procedure:
Tea infusions as prepared above was filled up to the brim in the cuvette and placed in the instrument for colour measurement. The instrument was calibrated using a standard white tile black light trap in accordance with the instructions provided in the instruction manual. The L*a*b* values were measured at room temperature (25°C).

The a* and b* axes have no specific numerical limits. Positive a* is red and negative a* is green. The higher the a* value, the redder the infusion appears.

Similarly, positive b* is yellow and negative b* is blue. The higher the b* value, the brighter the infusion appears.

### Iron Analysis

0.5 g of instant beverage was taken in a mug and 200 mL of boiling water was poured in to make the end cup. Then, 10 ml of liquid (in the form of a dispersion) was taken from the end cup for iron estimation.

Iron estimation was conducted using Inductively Coupled Plasma Optical Emission Spectroscopy (ICP-OES) spectral analysis as described below.

### Inductively Coupled Plasma Optical Emission Spectroscopy (ICP-OES)

The ICP-OES instrument used was Agilent 5110.

The ICP-OES instrument was calibrated using a 2.5% suprapur nitric acid calibration sample.

Multielement standard solutions were obtained from Merck at a concentration of 1000 ppm. These standard solutions were diluted to 1 ppb to 1ppm and peak intensity for iron was calibrated using a wavelength of 238.2 nm.

Samples were prepared by weighing out 5 g of the infusion and adding to a microwave digestor tube together with a 5mL aliquot of concentrated HNO₃. This mixture was then digested for 60 minutes at 90 °C. The solution was then made up to 20 mL. No filtering was required unless there were some visible particles. The sample was then injected into the instrument for analysis.

### Instant Tea Fortification

Instant black tea, instant green tea and instant match tea were each fortified with iron using the iron fortification procedure outlined above.

The colour of the end cup beverage was then assessed using the protocol described above.

The colour of instant tea beverages with and without iron were compared, together with a comparison of beverages fortified with insoluble micronized iron and soluble non-micronized iron. The results are presented in Tables 1 to 3 below.

**Table 1: Comparison of end cup colour of various instant black tea (IBT) products fortified with or without different forms of iron.**

| **Example** | **Beverage** | **Iron Source** | **Particle size** | **Dosed Iron (mg/cup)** | **L*** | **a*** | **b*** | **ΔE** |
|---|---|---|---|---|---|---|---|---|
| 1 | IBT | None | - | - | 74.3 | 18.7 | 69.3 | |
| 2 | IBT | FeCl₃ | - | 4 | 46.7 | 15.4 | 45.8 | 36 |
| 3 | IBT | Fe₂O₃ | <2 um | 4 | 72.7 | 19.5 | 70.0 | 2 |
| 4 | IBT | Electrolytic Iron | 7-9um | 4 | 74.1 | 18.5 | 68.7 | 1 |
| 5 | IBT | FePP | 2-5um | 4 | 70.7 | 18.2 | 65.4 | 5 |

**Table 2: Comparison of end cup colour of various instant green tea (IGT) products fortified with or without different forms of iron.**

| **Example** | **Beverage** | **Iron Source** | **Particle Size** | **Dosed Iron (mg/cup)** | **L*** | **a*** | **b*** | **ΔE** |
|---|---|---|---|---|---|---|---|---|
| 6 | IGT | None | - | - | 86.2 | 12.0 | 25.3 | |
| 7 | IGT | FeCl₃ | - | 4 | 46.8 | 1.57 | 14.8 | 52.0 |
| 8 | IGT | Fe₂O₃ | <2 um | 4 | 86.4 | 0.19 | 46.8 | 1.5 |
| 9 | IGT | Electrolytic Iron | 7-9um | 4 | 86.8 | 0.13 | 46.6 | 1.7 |
| 10 | IGT | FePP | 2-5um | 4 | 82.8 | 0.38 | 44.5 | 5.4 |

**Table 3: Comparison of end cup colour of various instant matcha tea (IMT) products fortified with or without different forms of iron (using 1g of instant tea product in 100 ml of boiled water).**

| **Example** | **Beverage** | **Iron Source** | **Particle Size (µm)** | **Dosed Fe (mg/cup)** | **L*** | **a*** | **b*** | **ΔE** |
|---|---|---|---|---|---|---|---|---|
| 11 | IMT | None | - | - | 14.4 | 7.99 | 23.35 | |
| 12 | IMT | FeCl₃ | - | 4 | 0.62 | 0.61 | 0.45 | 27.7 |
| 13 | IMT | FePP | 2-5um | 4 | 12.8 | 7.84 | 20.74 | 3.1 |

As can be seen from the data in Tables 1 to 3 above, instant tea products fortified with micronized iron sources surprisingly and beneficially produce end cup infusions with minimal colour change compared to the control. On the contrary, instant tea products fortified with soluble non-micronized forms of iron, such as FeCl3, displayed a significant colour change and darkening in colour compared to the control, as evidenced, for example, by the increase in ΔE value and decrease in b* value.

### Instant Herbal Compositions

A selection of instant herbal products were each fortified with iron using the iron fortification procedure outlined above.

The colour of instant herbal products with and without iron were compared, together with a comparison of instant herbal products fortified with insoluble micronized iron and soluble non-micronized iron. The results are presented in Tables 4 and 5 below.

**Table 4: Comparison of end cup colour of various instant hibiscus tea (IHT) products fortified with or without different forms of iron.**

| **Example** | **Beverage** | **Iron Source** | **Particle Size (µm)** | **Dosed Fe (mg / cup)** | **L*** | **a*** | **b*** | **ΔE** |
|---|---|---|---|---|---|---|---|---|
| 14 | IHT | None | - | - | 54.3 | 49.5 | 38.2 | |
| 15 | IHT | FeCl₃ | - | 4 | 48.9 | 43.2 | 34.8 | 9.0 |
| 16 | IHT | FePP | 2-5um | 4 | 53.5 | 48.9 | 38.2 | 1.1 |

**Table 5: Comparison of end cup colour of various instant rooibos tea (IRT) products fortified with or without different forms of iron.**

| **Example** | **Beverage** | **Iron Source** | **Particle Size (µm)** | **Dosed Fe (mg / cup)** | **L*** | **a*** | **b*** | **ΔE** |
|---|---|---|---|---|---|---|---|---|
| 17 | IRT | None | - | - | 76.3 | 15.9 | 79.5 | |
| 18 | IRT | FeCl₃ | - | 4 | 48.2 | 16.4 | 62.6 | 33 |
| 19 | IRT | FePP | 2-5 | 4 | 75.4 | 16.3 | 79.5 | 1.0 |

As can be seen from the data in Tables 4 and 5 above, instant herbal products fortified with micronized iron sources also surprisingly and beneficially produce end cup infusions with minimal colour change compared to the control.

### Particle Size

The influence of particle size of the micronized iron used to prepare the iron fortified instant beverage compositions of the invention was next assessed. Here, both infusion colour of the end cup and iron delivery to the end cup were assessed. The results are presented in Tables 7 to 10 below.

**Table 7: Comparison of end cup colour of various instant black tea (IBT) products fortified with or without micronized iron of different average particle size.**

| **Example** | **Beverage** | **Iron Source** | **Average Particle size (µm)** | **Dosed Iron (mg/cup)** | **L*** | **a*** | **b*** | **ΔE** |
|---|---|---|---|---|---|---|---|---|
| 25 | IBT | None | - | - | 74.3 | 18.7 | 69.3 | |
| 26 | IBT | FePP | 2-5 | 4 | 70.7 | 18.2 | 65.4 | 5 |
| 27 | IBT | FePP | 50-150 | 4 | 72.2 | 18.7 | 68.0 | 2 |

**Table 8: Comparison of iron delivery for various instant black tea (IBT) products fortified with or without micronized iron of different average particle size.**

| **Example** | **Beverage** | **Iron Source** | **Particle size (µm)** | **Dosed Iron (mg/cup)** | **Iron in liquid suspensio n (mg/cup)** | **% Iron in liquid suspension** |
|---|---|---|---|---|---|---|
| 26 | IBT | FePP | 2-5 | 4 | 2.3 | 58 |
| 27 | IBT | FePP | 50-150 | 4 | 1.2 | 31 |

**Table 9: Comparison of end cup colour of various instant green tea (IGT) products fortified with or without micronized iron of different average particle size.**

| **Example** | **Beverage** | **Iron Source** | **Particle size (µm)** | **Dosed Iron (mg/cup)** | **L*** | **a*** | **b*** | **ΔE** |
|---|---|---|---|---|---|---|---|---|
| 28 | IGT | None | - | - | 74.3 | 18.7 | 69.3 | |
| 29 | IGT | FePP | 8 | 4 | 82.8 | 0.38 | 44.5 | 5.4 |
| 30 | IGT | FePP | 30 | 4 | - | - | - | - |
| 31 | IGT | FePP | 50 | 4 | 85.4 | -0.47 | 43.4 | 5.0 |

**Table 10: Comparison of iron delivery for various instant green tea (IGT) products fortified with or without micronized iron of different average particle size.**

| **Example** | **Beverage** | **Iron Source** | **Particle size (µm)** | **Dosed Iron (mg/cup)** | **Iron in liquid suspension (mg/cup)** | **% Iron in liquid suspension** |
|---|---|---|---|---|---|---|
| 29 | IGT | FePP | 8 | 4 | 3 | 72.1 |
| 30 | IGT | FePP | 30 | 4 | 2.5 | 62.1 |
| 31 | IGT | FePP | 50 | 4 | 1.5 | 37.5 |

As can be seen from the data in Tables 7 to 10 above, instant beverage products (e.g. instant tea products) fortified with micronized iron with a particle size of between 0.1 and 50 microns surprisingly and beneficially deliver a greater percentage of iron to the end cup compared to instant beverage products (e.g. instant tea products) fortified with micronized iron with larger particle sizes.

Therefore, from the description of the invention is it clear that by way of present invention it is now possible to provide an iron fortified instant beverage composition with substantial amount of iron being delivered at each cup of beverages without any significant change in colour of the end beverage.

## Claims

1. An instant beverage composition comprising;
a) a micronized iron compound; and
b) an instant beverage product.

2. An instant beverage composition according to claim 1, wherein the particle size of the iron compound is in the range of 0.1 to 50 micron.

3. An instant beverage composition according to claim 1, wherein the particle size of the iron compound is in the range of 2 to 20 micron, preferably in the range of 2 to 10 micron.

4. An instant beverage composition according to claim 1, wherein the solubility of the iron compound in water at 25°C is less than 0.001 g/mL.

5. The instant beverage composition according to any one of the preceding claims, wherein the micronized iron compound is selected from micronized iron oxide, micronized ferric pyrophosphate, micronized carbonyl iron, micronized electrolytic iron and combination thereof.

6. The instant beverage composition according to any one of the preceding claims, wherein the micronized iron compound is micronized ferric pyrophosphate.

7. The instant beverage composition according to any one of the preceding claims, wherein the instant beverage is an instant tea product.

8. The instant beverage composition according to claim 7, wherein the instant tea product is an instant black tea product or an instant green tea product.

9. The instant beverage composition according to claim 7, wherein the instant tea product is an instant herbal product.

10. The composition according to claim 9, wherein the herbal product is an instant rooibos product.

11. The instant beverage composition according to any one of claims 1 to 6, wherein the instant beverage is an instant coffee product.

12. The instant beverage composition according to any one of the preceding claims, wherein the micronized iron compound is present in the range of 0.1 to 4 % by weight of the instant beverage composition.

13. The instant beverage composition according to any one of the preceding claims, wherein the instant beverage further comprises milk powder.

14. The instant beverage composition according to any one of the preceding claims, wherein the instant beverage further comprises sugar and/or a sweetener.

15. The instant beverage composition according to any one of the preceding claims, wherein the instant beverage further comprises one or more nutrient, flavouring and/or pH regulator.
